# FASCICULE DE BREVET EUROPEEN

(11) **EP 2 067 421 B1**
(45) Date de publication et mention de la délivrance du brevet: **06.04.2011**
(21) Numéro de dépôt: 08356148.0
(22) Date de dépôt: 02.12.2008
(51) Int. Cl.: A47J 31/40

(54) **Distributeur automatique de café moulu**
Automat für gemahlenen Kaffee
Automatic dispenser of ground coffee

(30) Priorité: 06.12.2007 FR 0708511; 16.05.2008 FR 0802654
(43) Date de publication de la demande: 10.06.2009
(73) Titulaire: SEB S.A., 69130 Ecully (FR)
(72) Inventeur: Dutertre, Thierry, 61000 Saint Germain du Corbeïs (FR); Mih, Séverine, 53100 Mayenne (FR); Reveillere, Fabrice, 53100 Mayenne (FR)
(74) Mandataire: Kiehl, Hubert

(56) Documents cités:
- DE-A1- 1 473 215
- DE-C1- 19 714 303
- FR-A- 2 713 906
- US-A- 2 894 662

## Description

La présente invention concerne un distributeur automatique de mouture destiné à être monté sur une machine à café automatique.

Un tel distributeur automatique de mouture est connu du document FR 2713906 et comprend un réservoir contenant de la mouture et des moyens aptes à transférer, par une ouverture d'écoulement située en la partie inférieure du réservoir, une dose de mouture vers la chambre d'infusion d'une machine à café automatique. Les moyens de transfert de la mouture sont constitués par plusieurs palettes de dosage rotatives situées au fond du réservoir et portées par un corps cylindrique entraîné en rotation autour de l'axe du réservoir par un groupe moteur: Quatre autres palettes radiales supérieures sont portées par une pièce de couplage de forme extérieure conique, sont agencées juste au-dessus des palettes de dosage afin de faire descendre la mouture dans le fond du réservoir et sont entraînées en rotation par les mêmes moyens que les premières. Le réservoir étant monté amovible dans la machine, des moyens de couplage sont prévus entre le groupe moteur et le corps cylindrique d'entraînement des palettes. Fonctionnant à satisfaction, on s'est rendu compte que certaines moutures avaient une tendance naturelle à s'agglomérer et à former des ponts à l'intérieur du réservoir faisant que la mouture n'arrivait plus à descendre jusqu'au niveau des palettes de dosage. Ceci pose d'importants problèmes de fonctionnement surtout dans le cadre d'une machine à café automatique lorsque la chambre d'infusion n'arrive plus à être alimentée correctement.

Une solution a été décrite dans le document DE 19714303 où le dispositif de dosage de café moulu comprend deux étages de pales rotatives et des moyens pour les entraîner en rotation en sens contraire. Ainsi, un tronçon inférieur de forme tronconique porte une première série de pales et se prolonge vers le haut par une pointe conique portant, elle, une deuxième série de pales. Le dispositif de dosage comporte des premiers moyens d'entraînement en rotation du tronçon inférieur et, entre celui-ci et le mélangeur, des deuxièmes moyens permettant d'inverser le sens du premier mouvement de rotation et de le transférer à la partie en pointe. Selon le document, ces moyens sont des pignons ou des poulies. Assurant toutefois un meilleur entraînement de la mouture vers le bas du réservoir, ce dispositif présente comme principal inconvénient la complexité de la construction, rendant difficile l'agencement des mécanismes de transmission dans un volume restreint qui est limité par les dimensions de la pièce conique. De surcroît, des phénomènes de grippage peuvent arriver lors de l'infiltration des grains de mouture au niveau de l'interstice séparant les deux parties mobiles : le mélangeur et le tronçon inférieur.

Le but de la présente invention est de remédier aux inconvénients précités et de proposer un distributeur automatique de café moulu apte à distribuer, de manière constante dans le temps, une quantité précise de mouture et ceci quel que soit le niveau de remplissage en mouture de café du réservoir.

Un autre but de l'invention est un distributeur automatique de mouture aisé à manipuler notamment dans un but de remplissage ou de nettoyage.

Un autre but de l'invention est un distributeur automatique de mouture qui soit fiable en fonctionnement, ayant une construction simplifiée et pouvant être fabriqué de manière économique.

Ces buts sont réalisés avec un distributeur automatique de mouture de café comportant un réservoir de mouture comprenant des pales de dosage rotatives pour transférer une quantité prédéterminée de mouture à travers une ouverture d'écoulement pratiquée au fond du réservoir et un cône entraîneur à pales rotatives disposées au-dessus de l'ouverture d'écoulement en étant mis en rotation par des moyens moteur autour d'un axe vertical du réservoir, du fait que le cône entraîneur se prolonge dans la partie haute du réservoir par un mélangeur de forme pyramidale.

Le distributeur automatique de mouture de l'invention comprend déjà, au fond de son réservoir contenant la mouture, des moyens de dosage agencés en dessous d'un cône entraîneur comportant des pales radiales rotatives mues par des moyens d'entraînement à moteur. Les pales du cône entraîneur agissent au fond du réservoir, mais au-dessus de l'ouverture d'écoulement afin de pousser la mouture vers les moyens de dosage adjacents. Avantageusement, les pales des moyens de dosage et celles d'entraînement de la mouture sont actionnées en utilisant une même source d'entraînement, notamment en reliant le cône entraîneur à un moyeu à pales de dosage amenées à tourner au fond du réservoir.

Selon l'invention, le cône entraîneur se prolonge en la partie haute du réservoir par un mélangeur de forme pyramidale. Ce mélangeur, relié au cône entraîneur et tournant avec celui-ci, permet alors de malaxer la mouture également en la partie haute du réservoir, en plus du mélange qui est réalisé en la partie basse du réservoir par les pales du cône entraîneur. De par cette rotation, le mélangeur de forme pyramidale permet à la mouture de descendre vers le cône entraîneur et d'ici vers les moyens de dosage pour être distribuée par l'ouverture d'écoulement et ceci pour un effort moindre au niveau du moteur du distributeur.

Par mélangeur de forme pyramidale on comprend une pièce qui, située à l'extrémité supérieure du cône entraîneur, peut avoir une forme de pyramide ou de tronc de pyramide, avec le sommet orienté vers le haut. En effet, après de nombreuses études réalisées en laboratoire avec différentes formes de mélangeurs, il a été constaté qu'une telle forme permettait de créer un vortex de longueur comparable à celui de la hauteur du mélangeur pyramidal permettant d'entraîner la mouture vers le fond du réservoir. Un tel mélangeur agencé au-dessus du cône entraîneur permet donc d'empêcher la formation des ponts dans la mouture contenue en la partie supérieure du réservoir et d'assurer un bon écoulement de celle-ci et ceci même pour des moutures de granulométrie très fine, par exemple utilisées pour préparer du café espresso. De préférence, le cône entraîneur et le mélangeur forment un ensemble mélangeur monobloc s'étendant jusqu'au niveau de remplissage maximum du réservoir.

Un tel ensemble monobloc permet de réaliser un malaxage dans toute la masse de mouture contenue dans le réservoir, même lorsque celui-ci est plein.

Avantageusement, le réservoir a une section transversale de forme circulaire et le mélangeur a une section transversale de forme carrée.

D'autres formes de sections (triangulaire, rectangulaire, en losange, hexagonale, etc.) étant possibles, il a été toutefois constaté lors des expérimentations effectuées en laboratoire qu'une telle section de forme carrée arrivait à entraîner de manière uniforme toutes les particules de café vers le fond du réservoir. Des résultats satisfaisants ont été ainsi obtenus avec un réservoir ayant un diamètre de 100mm et une pointe ayant une section carrée de côté compris entre 10mm en sa partie supérieure et 25mm à sa base, sans pour autant réduire la capacité du réservoir.

De préférence, le mélangeur de forme pyramidale a une hauteur égale à au moins la moitié de celle de l'ensemble mélangeur.

Des phénomènes d'entraînement de la mouture vers le fond du réservoir commencent à apparaître lorsque le mélangeur et le cône entraîneur présentent des longueurs comparables. Dans une variante, une telle pièce de forme pyramidale peut s'étendre sur toute la longueur de l'ensemble entraîneur.

Avantageusement, le mélangeur de forme pyramidale comprend deux ailettes longues s'étendant radialement et agencées à proximité de son extrémité inférieure.

La longueur des deux ailettes est légèrement inférieure au diamètre interne du réservoir afin de permettre, lors de leur rotation, de mieux mélanger la mouture en la partie supérieure du réservoir et de casser les éventuelles voûtes périphériques pouvant se former avec une mouture très fine, de café gras, qui a naturellement une forte tendance à s'agglomérer. Par ailleurs, en utilisant seulement deux ailettes, de surcroît, avantageusement réalisées en forme de tiges très fines, on limite le couple résistant à l'intérieur du réservoir, tout en améliorant la capacité de malaxage du dispositif. De plus, on a limité le nombre d'ailettes longues à deux également pour des raisons de praticité, afin de ménager plus de place pour accéder à l'intérieur du réservoir, par exemple lorsqu'il est procédé à son nettoyage.

Avantageusement, lesdites ailettes longues sont décalées angulairement par rapports aux pales du cône entraîneur.

Ceci assure un meilleur malaxage dans tout le volume du réservoir. Pour une meilleure efficacité, une ailette longue est placée à mi-distance entre deux pales rotatives du cône entraîneur situées en dessous.

De préférence, le mélangeur de forme pyramidale comporte deux ailettes courtes s'étendant radialement, agencées à proximité de son extrémité supérieure.

Ces ailettes courtes forment un moyen de préhension de l'ensemble mélangeur (de manière similaire aux ailettes d'un écrou papillon) par lequel l'utilisateur applique le couple de rotation lorsqu'il le fait tourner manuellement afin de nettoyer le fond du réservoir. En faisant tourner l'ensemble mélangeur, les pales de dosage, en tournant, balayent le fond du réservoir et font sortir les résidus de mouture par l'ouverture d'écoulement.

Avantageusement, les ailettes longues sont agencées dans un plan vertical passant par une diagonale de la section transversale du mélangeur et les ailettes courtes sont agencées dans un plan vertical perpendiculaire au premier.

Le mélangeur étant avantageusement réalisé en une matière plastique par une technique d'injection, cette construction à ailettes transversales permet un meilleur démoulage des pièces après l'injection.

De préférence, le mélangeur de forme pyramidale comporte un sommet ayant une face supérieure plane qui porte une indication du niveau de remplissage du réservoir.

Ceci est un moyen simple et fiable d'aide au remplissage du réservoir, une telle indication frontale étant bien visible pour un observateur le regardant, sans tenir compte de considérations de bon éclairage ou de coloris du réservoir.

Avantageusement, le réservoir est monté amovible dans un logement du distributeur et comporte des moyens de couplage en rotation avec ceux correspondants des moyens moteur du distributeur.

Ceci permet de pouvoir enlever le réservoir de mouture pour le remplacer par un autre contenant un autre type de mouture ou pour le nettoyer.

De manière avantageuse, la paroi interne du réservoir comprend au moins une nervure longitudinale faisant saillie à l'intérieur du réservoir.

Ainsi, la paroi interne du réservoir comprend au moins une nervure longitudinale faisant saillie à l'intérieur du réservoir. Une telle nervure protubérante forme un obstacle pour la mouture entraînée par les pales obligeant les grains à tourner individuellement lorsqu'ils sont entraînés par les pales d'entraînement. En effet, les grains de mouture, surtout lorsqu'ils sont très fins, s'agglutinent et forment des ponts ou blocs qui tournent autour de l'axe du réservoir en étant entraînés par les pales rotatives du cône entraîneur. De par leur entraînement en rotation, ces blocs percutent les nervures internes du réservoir réalisées comme des surépaisseurs dans ses parois internes, et sont de ce fait fissurés ou brisés par ces dernières. Ceci permet aux grains de mouture de se désolidariser et de tomber au fond du réservoir d'où ils sont distribués par les pales de dosage à travers l'ouverture d'écoulement du distributeur.

Ceci permet d'avoir un écoulement uniforme et un dosage précis de la mouture à la sortie du distributeur.

De préférence, la largeur de la nervure longitudinale couvre un secteur de cercle d'angle égal ou inférieur à celui compris entre deux pales rotatives adjacentes.

Les ponts ou blocs de mouture se formant entre deux pales adjacentes, ceci permet d'obtenir une bonne fragmentation de chaque bloc de mouture. De surcroît, on évite ainsi à deux pales adjacentes de venir simultanément en contact avec la ou les nervures (en effet une pale sort du secteur de la nervure avant que ou lorsque la suivante arrive en regard de la nervure) et on évite ensuite d'opposer trop de résistance à la rotation, ainsi que d'éventuelles surcharges du moteur d'entraînement du distributeur.

De préférence, la nervure est un secteur de couronne circulaire d'épaisseur comprise entre 0.1 et 0.5 mm, de préférence égale à 0.2mm.

La nervure ainsi réalisée présente donc une épaisseur constante, ce qui favorise le nettoyage du réservoir. Lors des tests effectués en laboratoire, il a été constaté qu'une épaisseur comprise entre 0.1 et 0.5 mm, de préférence égale à 0.2mm permet de briser efficacement les amas de mouture en rotation, sans empiéter sur le jeu existant entre le diamètre extérieur des pales rotatives d'entraînement et celui intérieur des nervures. En effet, ce jeu doit être supérieur au diamètre maximal des grains de mouture afin d'éviter le grippage des pales, mais suffisamment petit pour arriver à disloquer les grains agglutinés lorsqu'ils arrivent au contact de la nervure.

Avantageusement, la nervure longitudinale s'étend sensiblement sur la hauteur utile du réservoir.

Par hauteur utile du réservoir on entend la distance du fond jusqu'au niveau de remplissage maximum du réservoir. Une nervure s'étendant alors sur cette hauteur permet d'agir efficacement quel que soit le niveau de remplissage du réservoir.

Les buts de l'invention sont également réalisés avec une machine à café automatique comportant un distributeur de l'invention.

L'invention sera mieux comprise à l'étude d'un mode de réalisation pris à titre nullement limitatif et illustré dans les figures annexées dans lesquelles :
- la figure 1 illustre une vue en perspective d'une machine à café automatique comportant un distributeur automatique de mouture selon l'invention, le réservoir du distributeur étant représenté à côté de la machine;
- la figure 2a illustre une vue de dessus du distributeur de l'invention de la figure 1, le couvercle de son réservoir étant retiré ;
- la figure 2b illustre une vue en coupe axiale réalisée avec le plan A-A de la figure 2a ;
- la figure 3a est une vue de dessus d'un ensemble mélangeur appartenant au distributeur de l'invention ;
- la figure 3b est une vue en perspective de l'ensemble mélangeur de la figure 3a.
- la figure 4a est une vue en perspective d'un réservoir sans couvercle du distributeur de l'invention ;
- la figure 4b est une vue de dessus du réservoir de la figure 4a.

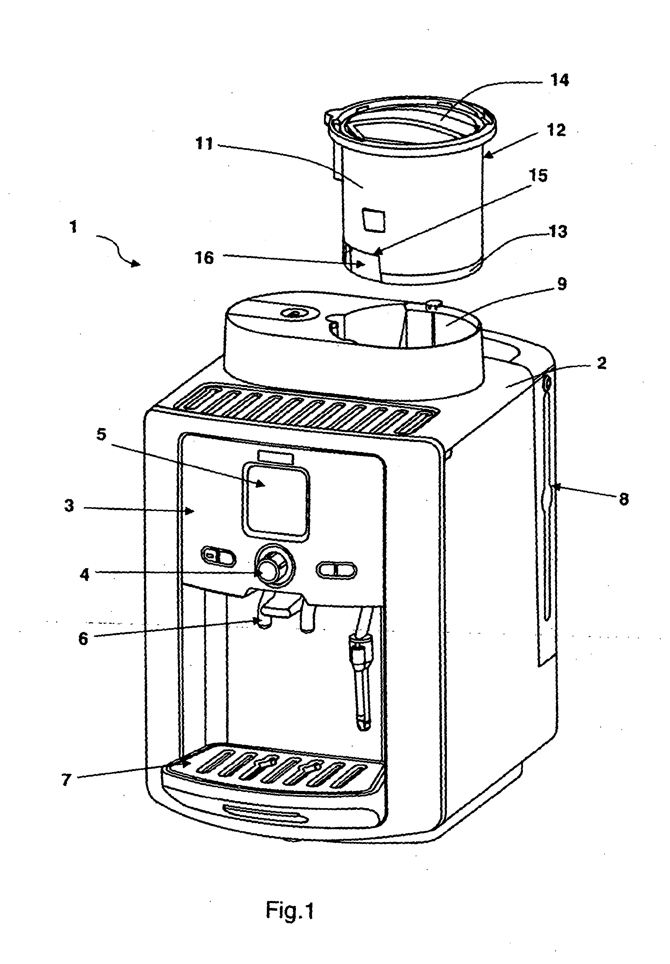

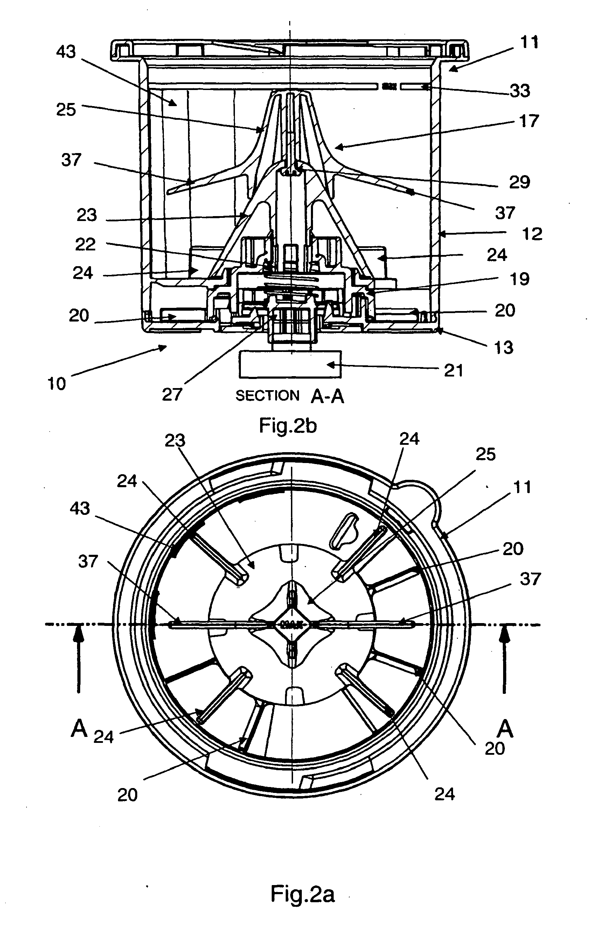

Une machine à café automatique 1 comportant un distributeur 10 (fig. 2b) selon l'invention est représentée sur la figure 1, où on remarque un boîtier 2 de la machine comportant un panneau avant 3 muni de boutons de commande 4 et d'un afficheur 5 pour présenter les informations destinées aux utilisateurs relatives au fonctionnement de la machine. La boisson est préparée dans la chambre d'infusion qui reçoit une quantité de café moulu en provenance du distributeur 10 et de l'eau chaude sous pression en provenance d'une chaudière alimentée depuis un réservoir d'eau 8. La boisson obtenue s'écoule par deux buses 6 qui délivrent le café dans une tasse posée sur un plateau de réception de tasses 7. La machine à café dispose par ailleurs d'un bac récupérateur des galettes de marc éjectées depuis la chambre d'infusion (non visible sur les dessins).

Une telle machine à café automatique comprend des éléments connus rencontrés sur cette catégorie de machines et peut incorporer les spécificités décrites dans le document WO 9912457 pour ce qui concerne le dispositif de tassage de la mouture de café dans la chambre d'infusion et pour l'éjection des galettes de marc. Une telle machine est notamment apte à assurer la température adéquate de l'eau amenée dans la chambre d'infusion et capable de réaliser le compactage de la mouture à l'intérieur de la chambre d'infusion. Le café obtenu après l'infusion du café moulu dans la chambre est évacué à l'extérieur de la machine dans un récipient collecteur, tel que par exemple décrit dans le document WO 9912456.

Une telle machine est capable de délivrer de nombreuses tasses de café au cours de plusieurs cycles de préparation sans que l'utilisateur ait à intervenir pour approvisionner du café, de l'eau ou à éliminer le marc après chaque infusion.

La partie supérieure du boîtier 2 de la machine reçoit un distributeur automatique de mouture 10 comportant, dans un logement 9, un réservoir 11 amovible contenant une quantité de café moulu. Le réservoir 11 a une forme générale cylindrique, présente une paroi latérale 12, un fond 13 et un couvercle 14. Le réservoir présente une ouverture d'écoulement 15 réalisée dans sa partie inférieure, plus particulièrement dans l'exemple représenté, elle est sous forme d'une fente oblongue réalisée en partie sur la paroi latérale 12 et se prolongeant sur la paroi de fond 13. Un volet 16 mobile ayant une même forme que celle de l'ouverture d'écoulement 15, permet de l'obturer lorsque le réservoir est retiré de la machine et de dégager cette ouverture lorsque le réservoir est installé dans la machine. Le café moulu sortant par l'ouverture d'écoulement 15 passe dans une goulotte de transfert pour tomber ensuite par gravité dans la chambre d'infusion de la machine.

Le distributeur 10 est mieux visible aux figures 2a et 2b où l'on peut remarquer, à l'intérieur de son réservoir 11, un cône entraîneur 23 muni de plusieurs pales d'entraînement 24 (quatre pales d'entraînement étant prévues dans l'exemple représenté) fixé à un moyeu cylindrique 19 comportant également plusieurs pales de dosage 20 (huit pales de dosage étant prévues dans l'exemple représenté). Le cône entraîneur 23 comporte en sa partie inférieure des languettes 22 à crochet venant se fixer à l'intérieur du moyeu cylindrique 19 qui est, lui, entraîné en rotation par des moyens moteur 21 autour de l'axe vertical du réservoir 11. Les moyens moteur 21 comprennent un moteur, un réducteur, un circuit de commande et un circuit d'alimentation en énergie (non représentés). Le réservoir étant monté amovible par rapport aux autres composants du distributeur montés, eux, fixes à l'intérieur du boîtier 2 de la machine, on munit le moyeu cylindrique 19 de moyens de couplage 27 en rotation coopérant avec des moyens de couplage correspondants des moyens moteur 21.

En fonctionnement, les pales d'entraînement 24 tournent et dirigent la mouture vers les pales de dosage 20 en dessous qui tournent pour amener une dose de mouture à l'ouverture d'écoulement. Après distribution d'une dose prédéterminée de café moulu, l'arrêt des moyens moteur 21 assure un positionnement des pales de dosage 20 tel que deux d'entre elles bordent l'ouverture d'écoulement 15 de manière à empêcher tout écoulement de mouture. Le principe de fonctionnement d'un tel distributeur de café moulu est mieux décrit dans le document EP 0 735 836.

Selon l'invention, le cône entraîneur 23 se prolonge vers la partie supérieure du réservoir 11 par un mélangeur 25 de forme pyramidale, le sommet de la pyramide pointant en direction du couvercle 14 du réservoir. Le mélangeur 25 est fixé au cône entraîneur 23 par une vis 29 centrale et forme avec celui-ci un ensemble mélangeur monobloc 17. Cet ensemble mélangeur 17 est ainsi amené à tourner autour de l'axe vertical du réservoir lors de l'alimentation des moyens moteur 21.

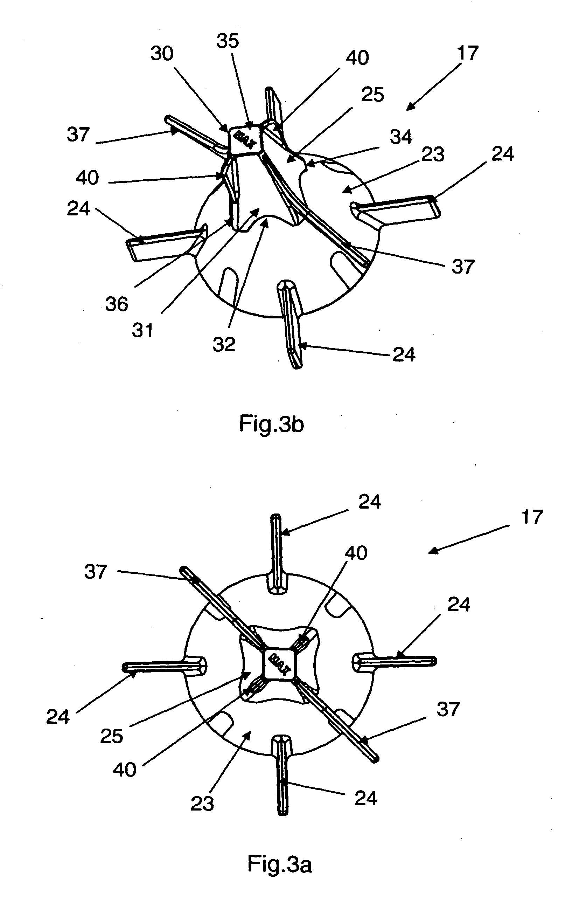

Un ensemble mélangeur monobloc 17 est mieux visible aux figures 3a et 3b où l'on peut remarquer le mélangeur 25 comportant un corps central 30 en forme de tronc de pyramide dont la base 34 de forme carrée prend appui sur le sommet du cône entraîneur 23. Pour un meilleur contact avec le sommet du cône entraîneur 23, des découpes 32 en forme d'arc de cercle sont prévues à la base de chaque face 31 du corps 30. La hauteur du corps 30 est telle que l'ensemble mélangeur 17 arrive jusqu'au niveau de remplissage maximum 33 (fig. 2b) du réservoir 11. Pour faciliter la visualisation de ce niveau de remplissage, le sommet 35 du corps 30 porte l'inscription « max ».

Selon une autre caractéristique avantageuse de l'invention, le corps 30 porte deux ailettes longues 37 situées l'une dans le prolongement de l'autre suivant l'une des diagonales de la base 34, chaque ailette s'étendant radialement à partir d'une arête 36 du corps 30 jusqu'à la périphérie interne du réservoir 11, tout en ménageant un jeu avec celle-ci. L'ailette 37 s'étend radialement légèrement vers le bas du réservoir (faisant un angle d'environ 20° par rapport à l'horizontale), et a une forme de tige de section de faibles dimensions, par exemple une section de forme carrée de côté inférieur ou égal à 4mm. Son rôle est de briser les mottes de mouture formées dans la partie supérieure du réservoir, plus précisément vers la périphérie de celui-ci. L'axe d'une ailette 37 est décalé angulairement, à un angle de 45° par rapport à celui d'une pale 24, pour une meilleure efficacité du malaxage.

Le corps 30 comporte de plus, en sa partie haute, deux ailettes courtes 40 situées l'une dans le prolongement de l'autre dans un plan vertical passant par l'autre diagonale de la base 34. Une ailette courte 40 a une forme générale triangulaire, la base du triangle étant située au niveau du sommet 35. Les deux ailettes courtes 40 forment un moyen de préhension de l'ensemble mélangeur, de manière similaire aux ailettes d'un écrou papillon, par lequel l'utilisateur applique le couple de rotation lorsqu'il le fait tourner manuellement dans un but de nettoyage du fond du réservoir 11.

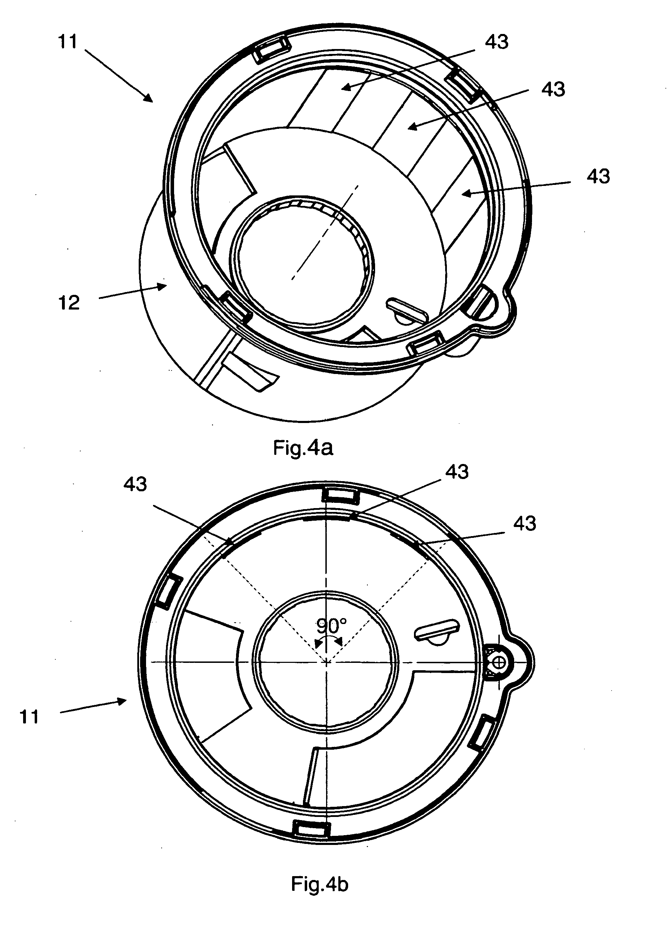

Selon une autre caractéristique avantageuse de l'invention, la paroi interne du réservoir 11 comprend au moins une nervure longitudinale 43 faisant saillie à l'intérieur du réservoir 11. Dans l'exemple représenté aux figures, trois nervures longitudinales 43 sont réalisées sur la face interne de la paroi latérale 12 du réservoir 11. Tel que mieux visible aux figures 4a et 4b, trois nervures 43 sont uniformément réparties sur un secteur circulaire faisant un angle de 90° au sommet et sont protubérantes radialement vers le centre du réservoir 11.

Chaque nervure 43 a une forme de secteur de couronne circulaire, présente une épaisseur constante de 0.2 mm, une largeur d'environ 10 mm et s'étend sur toute la longueur utile du réservoir, notamment jusqu'au niveau de remplissage maximum du réservoir 11. Une telle épaisseur constante permet aux grains individuels de bien glisser sur la partie en arc de cercle de chaque nervure et également de faciliter le nettoyage du réservoir. Les nervures 43 sont réalisées monobloc avec le réservoir 11, de préférence en une matière plastique par une technique d'injection.

En fonctionnement, l'utilisateur remplit le réservoir en versant du café jusqu'au niveau « max » du sommet 35. Le réservoir 11 est ensuite installé dans la machine à café. Lorsque l'utilisateur commande un café, les moyens moteur 21 font tourner le moyeu cylindrique 19 et l'ensemble mélangeur 17. Ceci a pour effet de malaxer la mouture en la partie supérieure du réservoir à l'aide du mélangeur 25 de forme pyramidale. Les ponts ou blocs de mouture, voire les éventuelles voûtes de mouture sont brisés lorsqu'ils viennent au contact des nervures 43 en étant entraînés par les pales 24 et par les ailettes longues 37. La mouture ainsi uniformisée et fluidifiée arrive au niveau des pales de dosage 20 qui, elles, distribuent la dose nécessaire par l'ouverture d'écoulement 15. Ainsi, plusieurs cafés peuvent être préparés sans l'intervention de l'utilisateur. Lorsque le réservoir 11 est vide, il est enlevé de la machine et l'utilisateur peut nettoyer les résidus de café, par exemple, manuellement à l'aide d'une brosse, puis fait tourner à la main l'ensemble mélangeur 17 en appliquant un mouvement de rotation aux ailettes courtes 40. Le réservoir peut ensuite être rempli avec de la mouture de café.

Bien entendu, l'invention n'est nullement limitée au mode de réalisation décrit et illustré qui n'a été donné qu'à titre d'exemple. Ainsi, les ailettes longues 37 et courtes 40 peuvent ne pas être planes, mais en spirale en étant orientées en sens horaire ou antihoraire. Les ailettes longues radiales peuvent se terminer par une partie descendante passant le long de la paroi interne cylindrique du réservoir 11.

Ce système de mélangeur peut être utilisé avec d'autres produits pulvérulents, tels le lait en poudre, le sucre etc.

Ainsi, les ailettes longues 37 et courtes 40 peuvent ne pas être planes, mais en spirale en étant orientées en sens horaire ou antihoraire. Les ailettes longues radiales peuvent se terminer par une partie descendante passant le long de la paroi interne cylindrique du réservoir 11.

Des modifications restent possibles, notamment du point de vue de la constitution des divers éléments ou par substitution d'équivalents techniques, sans sortir pour autant du domaine de protection de l'invention.

## Revendications

1. Distributeur automatique de mouture (10) de café comportant un réservoir (11) de mouture comprenant des pales de dosage (20) rotatives pour transférer une quantité prédéterminée de mouture à travers une ouverture d'écoulement (15) pratiquée au fond du réservoir (11) et un cône entraîneur (23) à pales rotatives (24) disposées au-dessus de l'ouverture d'écoulement (15) en étant mis en rotation par des moyens moteur (21) autour d'un axe vertical du réservoir (11), **caractérisé en ce que** le cône entraîneur (23) se prolonge dans la partie haute du réservoir (11) par un mélangeur (25) de forme pyramidale.

2. Distributeur selon la revendication 1, **caractérisé en ce que** le cône entraîneur (23) et le mélangeur (25) forment un ensemble mélangeur (17) monobloc s'étendant jusqu'au niveau de remplissage maximum du réservoir (11).

3. Distributeur selon l'une des revendications 1 ou 2, **caractérisé en ce que** le réservoir (11) a une section transversale de forme circulaire et le mélangeur (25) a une section transversale de forme carrée.

4. Distributeur selon l'une des revendications 1 à 3, **caractérisé en ce que** le mélangeur (25) de forme pyramidale a une hauteur égale à au moins la moitié de celle de l'ensemble mélangeur (17).

5. Distributeur selon l'une des revendications précédentes, **caractérisé en ce que** le mélangeur (25) de forme pyramidale comprend deux ailettes longues (37) s'étendant radialement, agencées à proximité de son extrémité inférieure.

6. Distributeur selon la revendication 5, **caractérisé en ce que** lesdites ailettes longues (37) sont décalées angulairement par rapport aux pales (24) du cône entraîneur (23).

7. Distributeur selon l'une des revendications précédentes, **caractérisé en ce que** le mélangeur (25) de forme pyramidale comporte deux ailettes courtes (40) s'étendant radialement, agencées à proximité de son extrémité supérieure.

8. Distributeur selon l'une des revendications 6 et 7, **caractérisé en ce que** les ailettes longues (37) sont agencées dans un plan vertical passant par une diagonale de la section transversale du mélangeur (25) et que les ailettes courtes (40) sont agencées dans un plan vertical perpendiculaire au premier.

9. Distributeur selon l'une des revendications précédentes, **caractérisé en ce que** le mélangeur (25) de forme pyramidale comporte un sommet (35) ayant une face supérieure plane qui porte une indication du niveau de remplissage du réservoir (11).

10. Distributeur selon l'une des revendications précédentes, **caractérisé en ce que** le réservoir (11) est monté amovible dans un logement (9) du distributeur et comporte des moyens de couplage (27) en rotation avec ceux correspondants des moyens moteur (21) du distributeur.

11. Distributeur selon l'une des revendications précédentes, **caractérisé en ce que** la paroi interne du réservoir (11) comprend au moins une nervure longitudinale (43) faisant saillie à l'intérieur du réservoir (11).

12. Distributeur selon la revendication 11, **caractérisé en ce que** la largeur de la nervure longitudinale (43) couvre un secteur de cercle d'angle égal ou inférieur à celui compris entre deux pales rotatives (24) adjacentes.

13. Distributeur selon l'une des revendications 11 et 12, **caractérisé en ce que** la nervure est un secteur de couronne circulaire d'épaisseur comprise entre 0.1 et 0.5 mm, de préférence égale à 0.2mm.

14. Distributeur selon l'une des revendications 11 à 13, **caractérisé en ce que** la nervure longitudinale (43) s'étend sensiblement sur la hauteur utile du réservoir (11).

15. Machine à café automatique (1) **caractérisée en ce qu'**elle comporte un distributeur selon l'une des revendications 1 à 14.

## Claims

1. An automatic ground coffee dispenser (10) with a ground coffee storage vessel (11) comprising rotary serving paddles (20) for transferring a predetermined quantity of ground coffee through an outflow opening (15) formed in the bottom of the storage vessel (11) and a cone-shaped driver (23) with rotary paddles (24) located above the outflow opening (15) turned by motor means (21) about a vertical axis of the storage vessel (11), **characterised in that** the cone-shaped driver (23) extends into the upper part of the storage vessel (11) through a pyramid-shaped mixer (25).

2. A dispenser according to claim 1, **characterised in that** the cone-shaped driver (23) and the mixer (25) form a one-piece mixer assembly (17) extending up to the maximum filling level of the storage vessel (11).

3. A dispenser according to one of claims 1 or 2, **characterised in that** the storage vessel (11) has a circular cross section and that the mixer (25) has a square cross section.

4. A dispenser according to one of claims 1 to 3, **characterised in that** the pyramid-shaped mixer (25) has a height equal to at least half of that of the mixer assembly (17).

5. A dispenser according to one of the preceding claims, **characterised in that** the pyramid-shaped mixer (25) comprises two long fins (37) extending radially, located near its lower end.

6. A dispenser according to claim 5, **characterised in that** said long fins (37) are offset angularly with respect to the paddles (24) of the cone-shaped drive (23).

7. A dispenser according to one of the preceding claims, **characterised in that** the pyramid-shaped mixer (25) comprises two short fins (40) extending radially, located near its upper end.

8. A dispenser according to one of claims 6 and 7, **characterised in that** the long fins (37) are arranged in a vertical plane passing through a diagonal of the cross section of the mixer (25) and that the short fins (40) are arranged in a vertical plane perpendicular to the former.

9. A dispenser according to one of the preceding claims, **characterised in that** the pyramid-shaped mixer (25) comprises an apex (35) with a flat upper face which has an indication of the filling level of the storage vessel (11).

10. A dispenser according to one of the preceding claims, **characterised in that** the storage vessel (11) is mounted removably in a housing (9) of the dispenser and comprises coupling means (27) that rotate with those corresponding to the motor means (21) of the dispenser.

11. A dispenser according to one of the preceding claims, **characterised in that** the inner wall of the storage vessel (11) comprises at least one longitudinal rib (43) protruding into the storage vessel (11).

12. A dispenser according to claim 11, **characterised in that** the width of the longitudinal rib (43) covers a circle sector with an angle equal to or lower than the one between two adjacent rotary paddles (24).

13. A dispenser according to one of claims 11 and 12, **characterised in that** the rib is a circular crown sector with a thickness between 0.1 and 0.5 mm, preferably equal to 0.2 mm.

14. A dispenser according to one of claims 11 to 13, **characterised in that** the longitudinal rib (43) extends substantially over the working depth of the storage vessel (11).

15. An automatic coffee maker (1) **characterised in that** it comprises a dispenser according to one of claims 1 to 14.

## Patentansprüche

1. Automatischer Kaffeemehlspender (10) mit einem Behälter (11) für Kaffeemehl, umfassend Drehschaufeln (20) zur Dosierung, um eine vorausbestimmte Menge von Kaffeemehl durch eine Durchflussöffnung (15), die am Boden des Behälters (11) ausgebildet ist, zu transportieren, und einen Antriebskegel (23) mit Drehschaufeln (24), die über der Durchflussöffnung (15) angeordnet sind und durch Antriebsmittel (21) um eine vertikale Achse des Behälters (11) in Drehung gebracht werden, **dadurch gekennzeichnet, dass** sich der Antriebskegel (23) im oberen Teil des Behälters (11) durch einen pyramidenförmigen Mischer (25) fortsetzt.

2. Spender nach Anspruch 1, **dadurch gekennzeichnet, dass** der Antriebskegel (23) und der Mischer (25) eine einteilige Mischeinheit (17) bilden, die sich bis zum Höchstfüllstand des Behälters (11) fortsetzt.

3. Spender nach einem der Ansprüche 1 oder 2, **dadurch gekennzeichnet, dass** der Behälter (11) einen kreisförmigen Querschnitt und der Mischer (25) einen quadratischen Querschnitt hat.

4. Spender nach einem der Ansprüche 1 bis 3, **dadurch gekennzeichnet, dass** der pyramidenförmige Mischer (25) eine Höhe aufweist, die gleich ist wie mindestens die Hälfte der Höhe der Mischeinheit (17).

5. Spender nach einem der vorhergehenden Ansprüche, **dadurch gekennzeichnet, dass** der pyramidenförmige Mischer (25) zwei lange Flügel (37) umfasst, die sich radial ausbreiten und in der Nähe seines unteren Endes angeordnet sind.

6. Spender nach Anspruch 5, **dadurch gekennzeichnet, dass** die langen Flügel (37) in Bezug auf die Schaufeln (24) des Antriebskegels (23) winkelmäßig versetzt sind.

7. Spender nach einem der vorhergehenden Ansprüche, **dadurch gekennzeichnet, dass** der pyramidenförmige Mischer (25) zwei kurze Flügel (40) umfasst, die sich radial ausbreiten und in der Nähe seines oberen Endes angeordnet sind.

8. Spender nach einem der Ansprüche 6 und 7, **dadurch gekennzeichnet, dass** die langen Flügel (37) in einer vertikalen Ebene angeordnet sind, die durch eine Diagonale des Querschnitts des Mischers (25) verläuft, und dass die kurzen Flügel (40) in einer vertikalen Ebene angeordnet sind, die lotrecht zur ersten verläuft.

9. Spender nach einem der vorhergehenden Ansprüche, **dadurch gekennzeichnet, dass** der pyramidenförmige Mischer (25) eine Spitze (35) mit einer ebenen Oberfläche umfasst, die eine Anzeige für den Füllstand des Behälters (11) trägt.

10. Spender nach einem der vorhergehenden Ansprüche, **dadurch gekennzeichnet, dass** der Behälter (11) abnehmbar in einer Aufnahme (9) des Spenders montiert ist und Drehkopplungsmittel (27) umfasst, die mit jenen der Antriebsmittel (21) des Spenders zusammenwirken.

11. Spender nach einem der vorhergehenden Ansprüche, **dadurch gekennzeichnet, dass** die innere Wand des Behälters (11) mindestens eine Längsrippe (43) umfasst, die einen Vorsprung im Inneren des Behälters (11) bildet.

12. Spender nach Anspruch 11, **dadurch gekennzeichnet, dass** die Breite der Längsrippe (43) einen Kreissektor abdeckt, dessen Winkel gleich oder kleiner ist als jener, der zwischen zwei angrenzenden Drehschaufeln (24) eingeschlossen ist.

13. Spender nach einem der Ansprüche 11 und 12, **dadurch gekennzeichnet dass** die Rippe ein Sektor eines Kreisrings ist, dessen Stärke zwischen 0,1 und 0,5 mm, bevorzugter Weise 0,2 mm, beträgt.

14. Spender nach einem der Ansprüche 11 bis 13, **dadurch gekennzeichnet, dass** sich die Längsrippe (43) im Wesentlichen über die nutzbare Höhe des Behälters (11) erstreckt.

15. Automatische Kaffeemaschine (1), **dadurch gekennzeichnet, dass** sie einen Spender nach einem der Ansprüche 1 bis 14 umfasst.
